Europäisches Patentamt

(19) European Patent Office

Office européen des brevets

(11) Publication number: **0 216 778**
**B1**

(12) **EUROPEAN PATENT SPECIFICATION**

(45) Date of publication of patent specification: **18.01.89**

(21) Application number: **85903423.3**

(22) Date of filing: **14.06.85**

(86) International application number:
**PCT/SE85/00252**

(87) International publication number:
**WO 86/00373 16.01.86 Gazette 86/02**

(51) Int. Cl.⁴: **F 01 M 11/03,** B 01 D 35/14,
F 16 N 31/00

(54) **ARRANGEMENT IN REMOVABLE OIL FILTERS.**

(30) Priority: **21.06.84 SE 8403344**

(43) Date of publication of application:
**08.04.87 Bulletin 87/15**

(45) Publication of the grant of the patent:
**18.01.89 Bulletin 89/03**

(84) Designated Contracting States:
**AT BE CH DE FR GB IT LI LU NL**

(56) References cited:
**none**

(73) Proprietor: **NORD, Runo**
**Dalavägen 9**
**S-826 00 Söderhamn (SE)**

(72) Inventor: **NORD, Runo**
**Dalavägen 9**
**S-826 00 Söderhamn (SE)**

(74) Representative: **Rostovanyi, Peter et al**
**AWAPATENT AB Box 5117**
**S-200 71 Malmö (SE)**

EP 0 216 778 B1

Courier Press, Leamington Spa, England.

## Description

### The Technical Field of the Invention

This invention refers to an arrangement in removable oil filters of the type comprising a first container having an end part which operatively connected to a liquid containing system, and a lower part including a closed bottom opposite to said end part.

### Background of the Invention

Oil filters of the kind which in addition to a filter part includes a cylindrical, often oblong container, are used for purifying the oil in engines of various types, e.g. diesel or petrol engines for trucks or the like. Such filters are at one of their ends provided with a threaded opening by means of which the container can be screwed into a connection to the lubrication system of the engine. When the oil in this system is changed the system is emptied through a plug or otherwise, for instance as disclosed in the Swedish patent application 8303510—5. The filter remains however filled with oil and if the filter also is to be changed in connection with the oil change, this can result in considerable difficulties when the filter is removed, which is normally done manually. Thus the oil runs over the edge and down the side of the filter container which causes the operator to lose his grip and to soil his hands with oil. The task of removing the filter is thus on one hand difficult to carry out in a convenient way and on the other hand harmful in so far that a repeated contact with the oil, especially used oil, is harmful from a medical point of view.

Several devices for emptying liquid containers by punching holds therein are known. US—A—1 657 782 discloses a device for piercing and removing caps from milk bottles. US—A—2 002 611 and US—A—2 774 393 both disclose dispensers, provided with means for piercing a sealed container and transferring the entire contents thereof to the dispenser. US—A—3 333 735 discloses a puncturing device for removing residual gas from aerosol containers. None of these known devices are however intended or suitable for preventing an overflow from a filter when this is disconnected and removed from a liquid-containing system.

### Brief Description of the Invention

The present invention is intended to remove the above-mentioned drawbacks and make possible a convenient, quick and clean change of oil filter containers. According to the invention these and other objects are achieved in that a second container is attached to said first container at the lower part thereof, said second container being normally substantially empty when the first container is operatively connected to a liquid-containing system and thus in a filled condition, and that a hole punching tool is associated to said second container in order to render the opening of a drainage hole at the lower part of said first container possible, prior to a removal of the filter from said liquid-containing system, so as to drain liquid from said first container into said second container lowering the liquid level in said first container and thus prevent an overflow of the liquid when disconnecting and removing said first container.

### Brief Description of the Attached Drawings

In the drawings Fig. 1 is a simplified section through an oil fiter made in accordance with the invention and shown in a state of use, Fig. 2 is a similar section showing the filter in connection with the removal thereof, Fig. 3 is a partial section of a filter according to an alernative embodiment and Figs. 4 and 5 are perspective views showing two different embodiments of a hole punching tool.

### Detailed Description of a Preferred Embodiment of the Invention

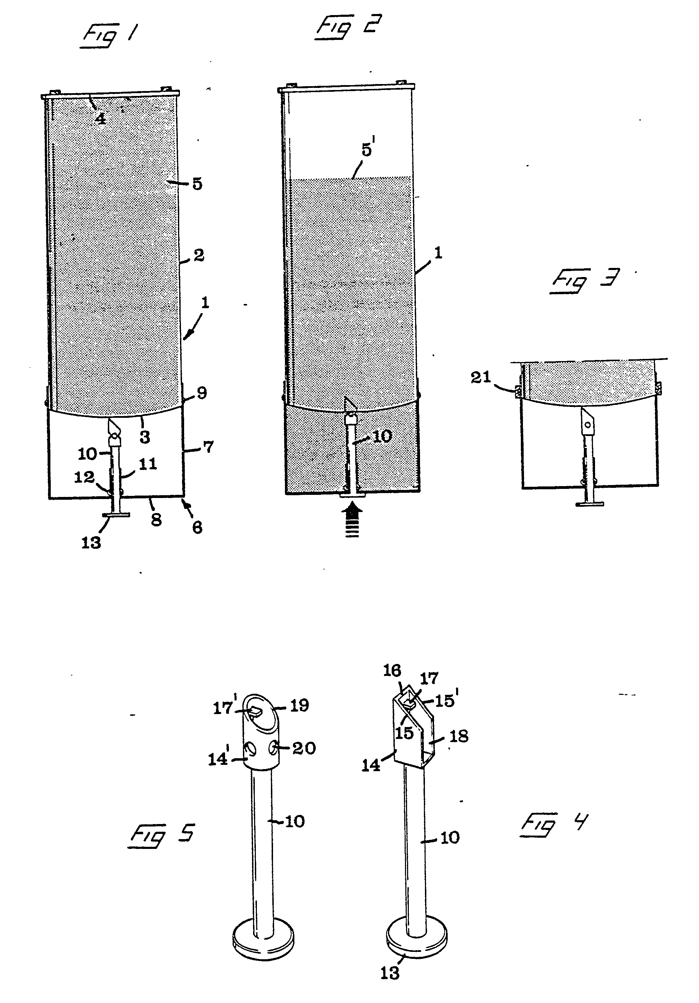

Throughout the drawings 1 generally denotes a conventional oil fiter in the form of a container which includes a cylindrical wall 2 as well as a bottom 3. In the end part 4 being opposited to the bottom there is an opening with a thread (not shown) for screwing the filter container into the connection of the lubrication system of an engine. The container also includes a filter part (not shown) for filtering the oil passing through the container. As shown in Fig. 1 the container is normally entirely filled with oil 5 when connected to and forming a part of said lubrication system.

In accordance with the basic idea of the invention a second container generally denoted 6 is associated with the filter container 1, said second container in this case being mounted to the bottom end of the container 1 and extending in extension thereof. Thus the container 6 too includes a cylindrical wall 7 as well as a bottom wall 8, said cylindrical wall 7 being fitted onto the outer side of the container 1 and in a suitable manner sealingly connected thereto, e.g. by means of a sealing ring 9.

To make it possible to make a hole in the bottom wall 3 of the container 1 a hole punching tool associated to the second container 6 and in the form of a striking pin 10 is mounted in a sleeve extending inwardly from the bottom 8, a sealing ring 12 being connected to said sleeve in order to seal the area between the inside of the sleeve and the outside of the striking pin. Advantageously the pin 10 on its free end protruding from the container 6 is provided with a plate 13 against which e.g. a hammer can be struck.

Reference is now made to Figs. 4 and 5 which illustrate two embodiments of the said striking pin. In the embodiment according to Fig. 4 the pin at its striking end is provided with a box 14 being U-shaped in section and having two cutting edges 15, 15' which extend obliquely backwards from a frontal edge portion 16. At some distance behind the edge portion 16 as seen in the direction of movement there is an abutment 17 serving as driver. When the box 14 is forced into the bottom 3 of the container 1 the edge portion 16 together with the cutting edges 15, 15' will cut out a U-shaped tab in the bottom wall. When this tab is engaged by the abutment 17 the tab will be carried along and swung into the container while forming a substantially rectangular opening in the bottom wall 3, the oil in the container 1 being able of flowing through the opening and the lateral opening 18 in the box 14.

In the embodiment according to Fig. 5 the box 14 is substituted for a short tube piece 14' having an obliquely cut oval cutting edge 19 and a carrier abutment 17'. In the tube piece 14' one or more drainage openings 20 are cut out. In this case a circular tab will but cut out in the bottom wall 3. Said tab will be safely swung sidewards by means of the abutment 17' while reliable forming a drainage opening in the bottom wall 3.

In Fig. 3 an embodiment is shown where the cylindrical wall 17 of the container 6 has been provided with a clamping ring 21 that exceptionally reliably holds the container 6 to the filter container 1.

The Function of the Invention

In Fig. 1 the filter container is connected to said lubrication system and thus filled with oil 5. The striking pin 10 is there in an inoperative position out of contact with the bottom wall 3.

When the filter is to be changed the lubrication system of the engine in question is first emptied. Both the container 1 and its connection to the engine will however remain filled with oil. To avoid that this oil flows over the edge of the container the pin 10 is forced into and through the bottom wall 3 in the manner shown in Fig. 2, an opening being formed in the bottom wall into the container 6 while lowering the oil level 5' considerably below the upper edge of the container 1. After this, the container 1 can be unscrewed without any risk that the oil overflows and flows down the outside of the container. In other words, the filter change can be carried out in a clean and convenient way without risking that the operator loses his grip of the container or soils his hands.

Possible Modifications of the Invention

It is obvious that the invention is not limited to the embodiment described and shown in the drawings. Thus the second or drainage container 6 can be formed as an integral part of the filter container itself already in connection with the manufacture thereof instead of being formed as a supplement that can be fitted to a conventional filter. Furthermore other arbitrary hole punching means that just a striking pin can be used. It is for instance possible to use a closure device that is normally screwed into a threaded opening in the bottom wall 3 and that can be unscrewed when oil is to be drained into the draining container 6. Nor is the position of the striking pin or hole punching tool limited to the central position shown in the drawings in that it of course can be positioned anywhere on the bottom wall 3 (or even on the cylindrical wall 2 if the geometrical design of the container 6 is other than that shown in the drawings). In this context is may also be mentioned that the draining container of course partly or entirely can be designed to be placed on the outer side of the cylindrical wall of the filter container, especially in the case it is desirable to keep the overall length of the filter arrangement as small as possible.

Claims

1. Arrangement in removable oil filters of the type comprising a first container (1) having an end part (4) which is operatively connected to a liquid containing system, and a lower part including a closed bottom (3) opposite to said end part (4), characterized in that a second container (6) is attached to said first container (1) at the lower part thereof, said second container (6) being normally substantially empty when the first container is operatively connected to a liquid-containing system and thus in a filled condition, and that a hold punching tool is associated to said second container (6) in order to render the opening of a drainage hole at the lower part of said first container (1) possible, prior to a removal of the filter from said liquid-containing system, so as to drain liquid from said first container (1) into said second container (6) lowering the liquid level (5') in said first container (1) and thus prevent an overflow of the liquid when disconnecting and removing said first container.

2. Arrangement according to claim 1, characterized in that said second or drainage container (6) is arranged on a closed bottom (3) of said first container (1) and includes a bottom wall (8) in which a striking pin (10) serving as a hole punching tool is arranged.

3. Arrangement according to claim 1 or 2, characterized in that the hold punching tool includes an obliquely cut, preferably U-or O-shaped cutting edge (15, 16; 19) arranged to cut out a tab or hole in the wall, a driver (17, 17') being arranged at a distance behind the cutting edge (16) first coming into contact with the wall, said carrier being intended to swing said tab or wall part while opening said hole.

Patentansprüche

1. Anordnung von ausbaubaren Ölfiltern umfassend einen ersten Behälter (1) mit einem Endstück (4), das mit einem Flüssigkeit enthaltenden System wirksam verbunden ist, und einem unteren Teil, der einen im Verhältnis zum Endstück (4) entgegengesetzt liegenden, geschlossenen Boden (3) hat, dadurch gekennzeichnet, dass eine zweiter Behälter (6) am unteren Teil des ersten Bahälters (1) angebracht ist, wobei der zweite Behälter (6) normalerweise im wesentlichen leer ist, wenn der erste Behälter mit einem Flüssigkeit enthaltenden System wirksam verbunden und somit gefüllt ist, und dass ein Lochstanzwerkzeug mit dem zweiten Behälter (6) verbunden ist, um vor dem Entfernen des Filters vom Flüssigkeit enthaltenden System ein Ablassloch im unteren Teil des ersten Behälters (1) aufzuschlagen, damit Flüssigkeit vom ersten Behälter (1) in den zweiten Behälter (6) abgelassen wird, wodurch der Flüssigkeitsstand 5' im ersten Behälter (1) gesenkt wird, und somit beim Abtrennen und Entfernen des ersten Behälters ein Ueberlaufen der Flüssigkeit verhindert wird.

2. Anordnung nach Anspruch 1, dadurch gekennzeichnet, dass der zweite Behälter oder Ablassbehälter (6) am geschlossenen Boden (3) des erste Behälters (1) angeordnet ist und eine Bodenwand (8) umfasst, in welcher eine als Lochstanzwerkzeug dienender Schlagstift (10) montiert ist.

3. Anordnung nach Anspruch 1 oder 2, dadurch gekennzeichnet, dass das Lochstanzwerkzeug eine schräg geschnittene, vorzugsweise U- oder O-förmige Schneide (15, 16; 19) umfasst, die einen Lappen oder eine Loch in der Wand ausstanzt, wobei im Abstand hinter der die Wand zuerst berührenden Schneide (16) ein Mitnehmer (17, 17') angeordnet ist und während des Lochschlagens den Lappen oder den Wandteil schwenkt.

## Revendications

Dispositif pour des filtres à huile amovibles du type comportant un premier conteneur (1) présentant une partie d'extrémité (4) qui est opérationnellement reliée à un système contenant du liquide, ainsi qu'une partie inférieure (1) présentant un fond (3) fermé en face de ladite partie d'extrémité (4), caractérisé en ce qu'un second conteneur (6) est attaché audit premier conteneur (1), à sa parite inférieure, ledit second conteneur (6) étant normalement substantiellement vide lorsque le premier conteneur se trouve opérationnellement reliée à un système contenant du liquide, et donc à l'état rempli; et en ce qu'un outil de perforation d'un trou est associé audit second conteneur (6) pour rendre possible l'ouverture d'un trou de vidange à la partie inférieure dudit premier conteneur (1) avant déposé du filtre hours dudit système contenant le liquide, de façon à vidanger le liquide, depuis ledit premier conteneur (1), dans ledit second conteneur (6), en abaissant le niveau du liquide (5') dans ledit premier conteneur (1) et en évitant ainsi un débordement du liquide lorsque l'on déconnecte et que l'on enlève ledit premier conteneur.

2. Dispositif selon la revendication 1, caractérisé en ce que ledit second conteneur (6), ou conteneur de vidange, est disposé sur un fond fermé (3) dudit premier conteneur (1) et présente une paroi de fond (8) dans laquelle est disposée une pointe de percussion (10) servant d'outil à perforer un trou.

3. Dispositif selon la revendication 1 ou 2, caractérisé en ce que l'outil à perforer un trou présente un borde de coupe (15, 16; 19) coupé obliquement, de préférence en forme de U ou de O, disposé, pour découper une languette ou un trou dans la paroi, un poussoir (17, 17') étant disposé à une certaine distance derrière le bord de coupe (16) qui vient le premier en contact avec la paroi, ledit poussoir étant prévu pour basculer ladite patte ou partie de paroi tout en ouvrant ledit trou.

Fig 1

Fig 2

Fig 3

Fig 5

Fig 4